# EUROPEAN PATENT APPLICATION

(11) **EP 0 611 011 A2**
(43) Date of publication of application: **17.08.1994**
(21) Application number: 94200750.1
(22) Date of filing: 23.01.1989
(51) Int. Cl.: F23L 15/02, F23C 9/00, F23C 6/04, F23C 7/00

(54) **Method and apparatus for suppressing NOx formation in regenerative burners**

(30) Priority: 16.03.1988 US 168892; 25.05.1988 US 198739
(62) Divisional of application: 89200141.3
(71) Applicant: BLOOM ENGINEERING COMPANY, INC.,, Pittsburgh Pennsylvania 15236 (US)
(72) Inventor: Hovis, James E., Pittsburgh, Pennsylvania 15217 (US); Finke, Harry P., Pittsburgh, Pennsylvania 15241 (US)
(74) Representative: Hoijtink, Reinoud

(57) **Abstract**

A method and apparatus for repressing NOx formation and controlling flame shape and characteristic in a regenerative burner during combustion. The regenerative burner having heat storage units (216,216') with combustion effluent/combustion air ducts therethrough, fuel intake means (205) and a burner (204). The burner may provide for staged combustion, either by means of sequential fuel injection or sequential provision of combustion air, or the burner may repress NOx formation by vitiation of combustion air with products of combustion. The regenerative burner may also include an interconnecting duct (224) communicating with the burners having a coaxial gas nozzle (222) for injecting a high kinetic energy gas stream into the exhausting hot flue gas to induce a portion of the hot flue gas into the interconnecting duct to pass the hot flue gas to the firing burner for vitiation purposes thereby repressing NOx formation.

## Description

### BACKGROUND OF THE INVENTION

The invention relates to generally regenerative type burners for heating a furnace, and more particularly to regenerative burners with minimized NOx formation in the ultimate combustion effluents.

Regenerative-type burners for furnaces are well-known in the art in varied forms and designs, but they share the common feature whereby heat storage units are provided to withdraw and store heat from hot combustion effluents known as flue gas, with subsequent transfer of the heat to preheat incoming combustion air. The earliest regenerative-type furnaces were symmetrical arrangements having both burner(s) and heat storage units (often solid structural arrays of "checker chamber" bricks) in place on each of two sides of the furnace. Firing of such a regenerative furnace began with the burner(s) on one side, with concomitant storage of the heat present in the combustion effluents by the heat storage units on the second side. After optimal heating of the heat storage units, or the "checker chamber," the air flow in the furnace was reversed to draw combustion air in through the checker chamber, thus preheating the combustion air. Ducts in the checker chamber thus alternately conveyed combustion products and combustion air, and the burners functioned alternately as burners and as flues.

Modern regenerative systems do not involve complete symmetrical furnaces but instead include specialized regenerative burners employed, typically, in pairs. Each of the paired regenerative burners is equipped with heat storage units, ordinarily in the form of compact regenerative beds, through which combustion air passes en route to the burner. Because the burners are employed in pairs, one burner is fired at a time while the other functions as a flue and heat storage bed. Then every 20-120 seconds or so, flow in the furnace is reversed and the burners "exchange" functions, that is, the first-fired burner becomes the flue gas exhaust/heat storage bed as the second burner fires. A system exemplary of one paired burner arrangement is found in U.S. Patent No. 4,522,588.

A persistent problem with regenerative systems involves the extremely high NOx concentrations inevitably present in the combustion effluents, produced as a result of the extremely high air preheats and flame temperatures, as well as through fuel bound nitrogen. As a result, regenerative systems which historically enjoyed industry-wide acceptance now cannot meet the emissions standards in an ever-increasing number of localities and/or process conditions. Additionally, the burners used with prior art "regenerator pairs" are of a fixed design and are not adaptable to control flame shape or characteristic. There is a need for low NOx burner concepts which can be broadly adapted to the specific applications by altering the flame temperature to meet NOx emission requirements. A need therefore persists for regenerative burner systems which provide the heat-regenerative function of prior art systems yet provide for significant NOx reduction and application adaptability as well.

### SUMMARY OF THE INVENTION

In order to meet this need, the present invention includes a pair of first and second spaced-apart regenerative burners having fuel delivery means, a burner chamber, a regenerative bed and a means incorporated within the regenerative burner apparatus for repressing NOx formation. The burners are adapted to operate cyclically such that a first burner is in a firing mode directing hot gases into a furnace interior while a flue gas stream exits the furnace and passes through the second burner chamber and then passes to the regenerative heat storage bed associated with the second burner.

NOx can be substantially reduced by incorporating in the burner design a suitable baffle or, more broadly, means to induce recirculation of combustion gases back into the primary combustion zone, by staging the fuel through sequential fuel injection, by staging the combustion air through sequential introduction of that air or through the use of vitiated combustion air where products of combustion are mixed with the combustion air on a controlled basis to reduce the oxygen content of the air, either by mixing flue gas into the combustion air at the fan inlet or within the burner structure itself.

The regenerative burner apparatus may, therefore, include a regenerative burner having a burner baffle with air jets or may include a plurality of gas jets, in such a manner that the jets induce recirculation of combustion gases back into the primary combustion zone to suppress NOx and also act to control the fuel/air mixing rates which establish flame shape and characteristic. The burner may provide staged combustion, either gas or air, or may suppress NOx through vitiating the air within the burner or through the use of vitiated air from the combustion fan. Certain embodiments of the present regenerative burner may include combustion gas recirculation back into the primary combustion zone, the use of vitiated air and either fuel or combustion air staging.

The present invention may also include burners having chambers which are connected at a respective combustion end to a spaced pair of first ducts which communicate with the interior of the furnace or to the tube of a U-shaped radiant tube burner and alternately act to emit hot combustion gases into the furnace or to exhaust hot flue gases from the furnace. Each of the burners have a heat regenerator media bed associated therewith which are respectively connected to a combustion air inlet duct/flue gas outlet duct. A vitiation duct interconnects the two burners or the furnace side of the regenerative beds and communicates with the interior chamber portion of each burner. A nozzle is positioned at each of the burner chambers to alternately inject a high velocity gas stream into the interconnecting duct. The high velocity stream entrains a portion of the flue gas containing hot products of combustion ("POC") exiting the furnace at the left burner and causes the entrained hot flue gas to vitiate the preheated combustion air in the right hand burner chamber. The balance of the hot flue gases pass through the left bank regenerative media bed to transfer its heat thereto for later transfer to a reverse flowing stream of combustion air (when the left bank is in the firing mode). A fuel nozzle or other injector means introduces a fuel stream to the mixture of hot POC containing flue gas and preheated combustion air at the right bank burner chamber whereby suppressed or reduced NOx formation in the burner flame is obtained. The regenerator sizing is significantly reduced while cycle efficiency is also increased due to the fact that the preheat combustion air is vitiated with a hot POC containing flue gas at very high temperatures, for example, between about 1800^{o} to 2000^{o}F. The lowered oxygen content of the vitiated combustion air lowers flame temperatures and minimizes NOx formation while the high BTU content of the hot vitiating POC containing flue gas contributes to higher furnace efficiencies.

In one preferred form of the invention, the injected stream of gas is injected tangentially relative to the stream of hot flue gas exiting the furnace to impart a swirling motion to the flue gas to create an enriched layer of POC which is then entrained in the vitiating stream. The present regenerative burners reduce NOx, control the flame shape and characteristic, yet preserve the high thermal efficiency characteristics of the regenerative systems.

### BRIEF DESCRIPTION OF THE DRAWINGS

Figure 1 is a schematic plan view of a twinned heat regenerative burner system according to the present invention;
Figure 2 is a schematic view in front elevation of the embodiment of the invention depicted in Figure 1;
Figure 3 is a schematic plan view of a further embodiment of the present invention in the form of twined burners having a modified form of fuel delivery;
Figure 4 is a cross-sectional view of the fuel injector manifold taken along lines XIV-XIV of Figure 3;
Figure 5 is a partial cross-sectional view of the gas injector left bank burner chamber and interconnecting duct taken along line XV-XV of Figure 3; and
Figure 6 is a sectional view of a further embodiment of the invention.

### DETAILED DESCRIPTION OF THE INVENTION

Reference is now made to the drawings in which identical elements are designated by identical reference numerals throughout the various figures.

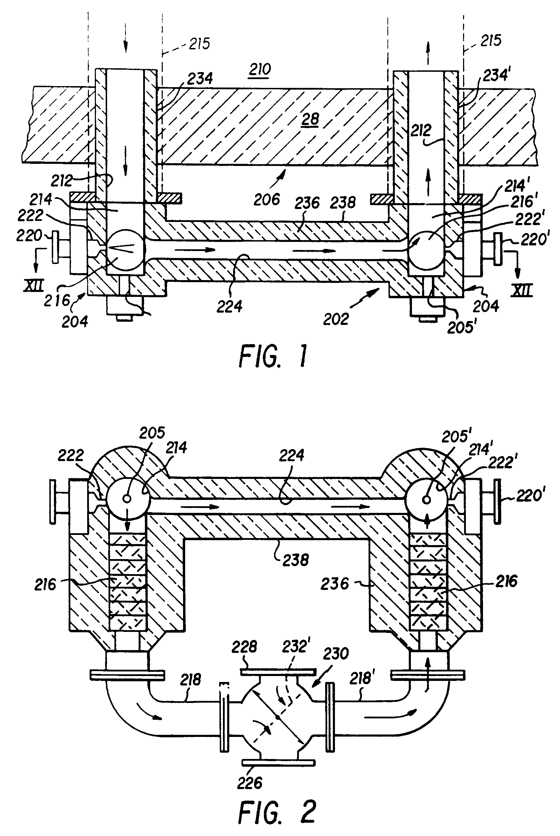

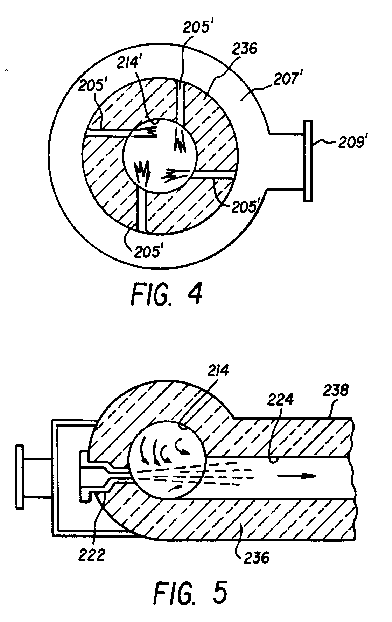

In the embodiment of the present invention shown in Figures 1 and 2, hot flue gases containing products of combustion ("POC") leave the furnace interior 210 under the influence of a forced or induced draft initiated by a remotely located fan means (not shown) and exit via a first duct 212 to then enter a burner chamber 214 of the burner 204 which is in a non-firing, exhaust mode. A medium pressure or a high pressure energy source, which may include air, POC or gaseous fuel, is pumped through a feed conduit 220 and discharged preferably at a high velocity through a nozzle 222, communicating therewith, into the burner chamber 214. The nozzle 222 is aligned co-axially with the longitudinal axis of an interconnecting duct 224. Duct 224 communicates at its ends with the burner chambers 214 and 214' of the spaced-apart left and right bank burners 204 and 204', respectively. The interconnecting duct 224 is preferably tangentially offset from the sidewalls of burner chambers 214 and 214' as shown in Figures 2 and 5. The high velocity gas stream which is emitted from the nozzle 222 creates an induction of a portion of the hot flue gas entering the chamber 214. The portion of hot flue gas so induced is entrained into the high velocity gas stream and passes through the interconnecting duct 224. A high kinetic energy is imparted to the gas stream exiting the nozzle 222 which is sufficient to move the subject gas stream and its entrained portion of flue gas from the left burner bank 204 to the right burner bank 204' via interconnecting duct 224, without the need for any auxiliary fans or blowers.

The major portion of the hot flue gas which exhausts from the furnace 206 at first duct 212 and enters the chamber 214, passes downwardly through a left heat storage bed or regenerator 216, of known construction, which extracts the sensible heat from the flue gas and stores the heat for later preheating of combustion air when the firing cycle is reversed. As best seen in Figure 2, cooled flue gas leaves the regenerator bed 216 by way of a duct 218, and is exhausted through a port 226 of a valve assembly 230. A rotatable valve plate 232 directs the cooled flue gas to the exhaust port 226 of valve 230 and simultaneously introduces cool combustion air therein by way of a port 228. The combustion air port 228 may be opened directly to the atmosphere, in a negative draft mode, or it may be connected to a positive pressure, fan driven system, all in a known manner. The cool combustion air passes through the valve 230 and enters a duct 218' whereupon it is passed upwardly through a previously heated regenerator bed 216'. Stored heat in the regenerator bed 216' is given up to preheat the incoming combustion air which then enters the right hand burner bank 204' at chamber 214'. The high velocity gas stream from nozzle 222 and its entrained hot flue gas, exiting interconnecting duct 224, enters the burner chamber 214' and mixes with the preheated combustion air therein to vitiate or dilute the combustion air stream by lowering the oxygen level thereof. The degree of vitiation to be achieved is controlled by the mass and velocity of the high velocity gas stream introduced through the feed conduit 220 and nozzle 222. By way of example, vitiation of the combustion air stream is controllable within a range of between about 15% to about 21% as measured in the mixed air and gas stream exiting the burner chamber 214' of the right bank burner 204'.

During the firing mode shown in the drawings, a fuel is introduced through a fuel conduit 205' positioned within the right bank burner 204'. A small quantity of ambient bled air or POC is preferably passed through feed conduit 220' and nozzle 222' during the right hand firing mode in order to cool those components. Simultaneously, when in the right bank firing mode, the left bank fuel conduit 205 is also preferably cooled by a small flow of ambient purge air or POC therethrough.

Primary combustion is initiated in the burner charger 214' of the right bank burner 204' and propagates through the duct 212' into a combustion chamber which can be the open interior 210 of the furnace or the interior of the radiant tube 215 connected to the duct 212'. A layer of refractory insulation 234, 234' envelopes the ducts 212, 212' to protect the support structure 208 or the radiant tube 215 from the high heat of combustion generated, within the ducts 212 and 212'. A layer of insulation 236 is also preferably applied around the burner banks 204, 204', regenerator beds 216, 216', and interconnecting duct 224, to minimize heat losses. An outer protective metal surface 238 is also applied to protect the insulation layer 236 against inadvertent damage.

The right hand firing mode cycle is completed as the flue gases containing POC exit the furnace 206 through the combustion chamber of first duct 212 on the left burner bank 204. As previously described, a portion of these flue gases are induced into the interconnecting duct 224 with the balance passing through the heat regenerator bed 216. The cooled flue gas is vented to a waste stack communicating with exhaust port 226 which is either connected to a suction provided by a negative draft system or vented to the stack when the combustion air port 228 is under the influence of a positive pressure air supply system.

After a given period of time elapses, the firing direction is reversed from the right hand mode shown to a left hand mode. The direction of combustion air and flue gas within the ducts 218, 218' and 224, as well as in the combustion/exhaust ducts 212, 212', is reversed from that shown in Figures 11 and 12. When the left bank burner 204 is in the firing mode, the valve plate 232 is rotated to the position indicated by phantom lines 232', which then directs cool combustion air upwardly through duct 218 for preheating in regenerator bed 216. In this mode, valve plate 232' concurrently directs the cooled flue gas now exiting from duct 218' to the waste stack via the exhaust port 226.

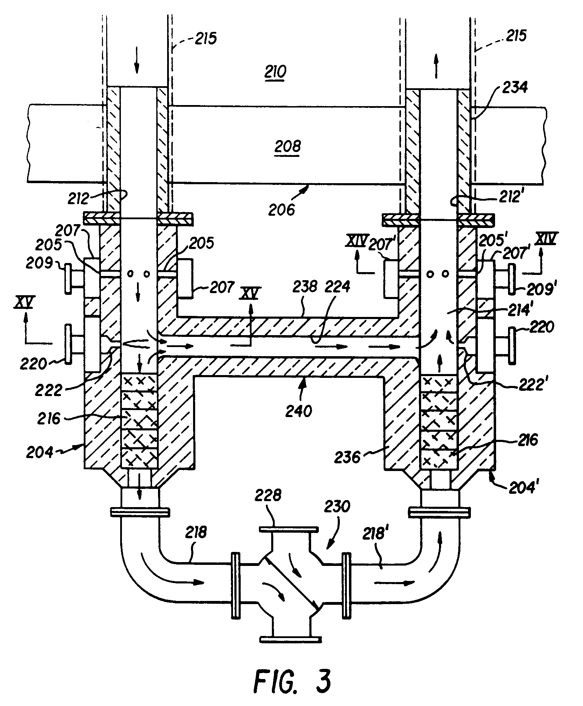

A slightly modified apparatus 240 embodying the principals of the present invention is depicted in Figures 3- 5. The apparatus 240 operates generally in the same manner as described, with the exception that the fuel stream is introduced tangentially into the swirling stream of flue gases exiting from the interconnecting duct 224. As seen in Figure 5, the high velocity gaseous jet from nozzle 222 induces a flow of a portion of the flue gas from chamber 214 into the interconnecting duct 224. The tangential offset of the duct 224 with the sidewall of chamber 214 and coaxial alignment of nozzle 222 with duct 224 creates a swirling motion in the flue gas within chamber 214 which provides an outer layer of highly enriched hot POC which is induced to pass into the duct 224 by the high velocity gas stream from nozzle 222. This swirling POC enrichment feature is also achieved in the embodiment of Figures 1- 2. As seen in Figure 4, a plurality of fuel conduits 205' supply a plurality of fuel streams tangentially to the chamber 214' to also impart a desired swirling motion to the combustion mixture. The fuel is supplied to the conduits 205' by way of an inlet duct 209' and a communicating, annular manifold 207' which surrounds the burner chamber 214'.

The flue gas/POC which is recirculated back into the combustion process to vitiate the combustion air is at a temperature approximately equal to the gases entering the furnace chamber. As a consequence, the sizing of regenerator 216, 216' can be significantly smaller than if vitiation were used on the stream entering the regenerator. In addition, the cycle efficiency when compared to using vitiated air directly into the regenerator is increased due to the fact that the self-vitiating flue gas/POC stream is already at temperatures between about 1800^{o} to 2000^{o}F when injected into the burner chambers 214, 214'. These obvious economic advantages are achieved while the desired ecological goal of NOx suppression is also realized.

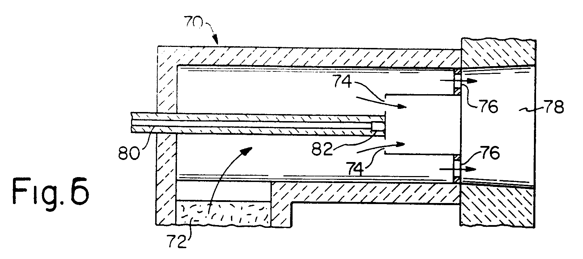

Referring now to Figure 6, the burner which effects staged combustion with staged combustion air is illustrated in pertinent part. The burner 70 having a regenerative bed 72 has a fuel line 80, fuel nozzle 82 (both embedded in refractory or otherwise insulated or cooled) and a port 78. Combustion air entering the burner 70 via the regenerative bed 72 mixes with fuel in two stages by means of the primary air passages 74 and the secondary air passages 76. Primary and secondary combustion are accomplished by initial provision, through primary air passages 74, of only 30-70% of the combustion air at the site of the fuel nozzle 82. The remaining 30-70% of the combustion air travels via secondary air passages 76 to effect secondary combustion in the port 78. This staged air combustion device operates fuel rich in the primary combustion zone, reducing flame temperature and thus suppressing NOx formation. A preferred construction would be that the air staging structure would be constructed of suitable ceramic material, due to the elevated temperature to which it is exposed. The arrangement of the air apertures 76, could be adjusted as to the number of holes, length of holes, direction and spin angle to provide minimum NOx and control of flame shape and characteristic. It is to be noted that despite the relatively more restricted air flow through primary and secondary air passages 74 and 76.

## Claims

1. An improved regenerative burner apparatus of the type having a pair of first and second spaced-apart regenerative burners, each of said burners including a chamber for mixing a fuel and a stream of preheated combustion air supplied from a regenerative heat storage bed associated with each of said burners characterized by means for repressing NOx formation comprising a vitiation duct interconnecting the two burners on the furnace side of the regenerative beds and communicating with the interior chamber portion of each burner, and a nozzle means positioned at each of the burner chambers to alternately inject a high velocity gas stream into the interconnecting duct.

2. The regenerative burner apparatus according to claim 1, wherein said nozzle means includes a nozzle associated with each of said burner chambers, each nozzle having an orifice aligned substantially coaxially with said interconnecting duct.

3. The regenerative burner apparatus according to claim 2 wherein said interconnecting duct is aligned tangentially relative to each of said burner chambers to impart a swirling motion in said hot flue gas whereby a layer of highly enriched products of combustion gas is entrained in said gas stream.

4. The regenerative burner apparatus according to claim 1, wherein each of said burner chambers includes a plurality of fuel inlet nozzles arranged tangentially relative to a bore of said chamber whereby a swirling motion is imparted to gases flowing therein to improve mix of the fuel, preheated combustion air and vitiating hot flue gases.

5. A method of repressing NOx formation in a twined pair of regenerative burners of the type having heat regeneration beds associated therewith for alternately withdrawing heat from a flue gas exiting a furnace and heating a combustion air stream being fed therethrough, comprising the steps of:
withdrawing a stream of hot flue gas from the furnace;
injecting a stream of gas into said flue gas stream;
entraining a portion of said hot flue gas within said injected gas stream;
passing said stream of injected gas and said entrained portion of hot flue gas to a burner chamber; and
vitiating a combustion process in said burner chamber with said portion of hot flue gas whereby NOx formation is repressed.

6. An improved regenerative burner apparatus of the type having a pair of first and second spaced-apart regenerative burners, each of said burners including a chamber for mixing a fuel and a stream of preheated combustion air supplied from a regenerative heat storage bed associated with each of said burners, characterized by means for repressing NOx formation comprising a burner having a fuel nozzle and a means for introducing a portion of combustion air into the area of the burner immediately adjacent said fuel nozzle and further having means for introducing the remainder of said combustion air downstream of said fuel nozzle.
